# EUROPÄISCHE PATENTSCHRIFT

(11) **EP 0 438 580 B1**
(45) Veröffentlichungstag und Bekanntmachung des Hinweises auf die Patenterteilung: **15.06.1994**
(21) Anmeldenummer: 90913180.7
(22) Anmeldetag: 01.08.1990
(51) Int. Cl.: F16C 13/00

(54) **DURCHBIEGUNGSEINSTELLWALZE**
CONTROLLED DEFLECTION ROLL
CYLINDRE A COURBURE REGLABLE

(30) Priorität: 04.08.1989 CH 2891/89
(43) Veröffentlichungstag der Anmeldung: 31.07.1991
(73) Patentinhaber: Sulzer - Escher Wyss AG, CH-8023 Zürich (CH)
(72) Erfinder: LEHMANN, Rolf, CH-8964 Rudolfstetten (CH)
(74) Vertreter: Hammer, Bruno, Dr.
(86) Internationale Anmeldenummer: EP9001254
(87) Internationale Veröffentlichungsnummer: WO9102173

(56) Entgegenhaltungen:
- EP-A- 315 567
- CH-A- 610 991
- DE-A- 3 710 724
- DE-U- 8 815 224
- FR-A- 2 381 201
- US-A- 3 802 044
- Patent Abstracts of Japan, volume 10, No. 174 (M-490)(2230), 19 June 1986, & JP,A,6124813 (MITSUBISHI JUKOGYO K.K.) 3 February 1986

## Beschreibung

Die Erfindung betrifft eine Durchbiegungseinstellwalze mit einem rotierbaren, gegenüber einem drehfesten Träger mit einer Reihe benachbarter hydraulischer Stützelemente in einer Pressebene abgestützten Walzenmantel, wobei die Stützelemente über Zuleitungen vom Träger aus mit hydraulischem, eine Presskraft erzeugenden Druckmittel versorgbar sind, und der Walzenmantel zumindest in dessen Endbereichen gegenüber dem Träger mit zusätzlichen, ebenfalls mit hydraulischem Druckmittel versorgbaren, im wesentlichen in einer Wirkebene senkrecht zur Pressebene wirkenden hydraulischen Spreizelementen abgestützt ist.

Eine solche Walze ist beispielsweise aus dem deutschen Gebrauchsmuster DE-U 88 15 224 bekannt und dient zur Druckbehandlung von Warenbahnen, z.B. zum Auspressen von Papier-, Pappen-, Textil- oder anderen Faserstoffbahnen, zum Walzen von Metallfolien oder zur Herstellung von Kunststoffolien oder als Presseur von Rotationsdruckmaschinen. Mit den hydraulischen Stützelementen kann dabei eine einstellbare oder regelbare Presskraft auf die Warenbahn erzeugt werden.

Nachteilig ist bei mit Durchbiegungseinstellwalzen arbeitenden Walzvorrichtungen, dass unmittelbar an den Rändern der behandelten Warenbahn aus verschiedenen Gründen eine übermässige Pressung, als Kantenpressung bekannt, auftritt, welche einen mehr oder weniger grossen Teil der Randpartien der Warenbahn unbrauchbar macht und einen zum Teil beträchtlichen Verschnitt notwendig macht. Die genannten Walzen versuchen, diesen Nachteil durch das Vorsehen von senkrecht zur Pressrichtung wirkenden Spreizquellen an den Walzenmantelenden zu beseitigen.

Walzen dieser Art gestatten jedoch keine Anpassung an eine andere Arbeitsbreite bei gleichzeitiger Aufrechterhaltung der Korrektur der Kantenpressung auch bei veränderter Bahnbreite.

Aus der CH-Patentschrift 610 991 ist zwar schon eine Walze bekannt, bei der mittels einer Steuereinrichtung, die beispielsweise in Achsenrichtung der Walze verschiebbare Trennwände oder ein veränderbares oder austauschbares Einbaustück im Träger aufweist, die Arbeitsbreite der Walze, d.h. die Anzahl gleichzeitig beaufschlagter benachbarter Stützelemente in Achsenrichtung der Walze verändert und an die Breite der Warenbahn angepasst werden kann. Eine Beseitigung der Kantenpressung bei verschiedenen Arbeitsbreiten ist dabei jedoch nicht vorgesehen.

### Darstellung der Erfindung

Die Erfindung setzt sich die Aufgabe, die genannten Nachteile des Standes der Technik zu beseitigen und insbesondere eine Durchbiegungseinstellwalze der einleitend angegebenen Art derart weiterzubilden, dass bei einer Verkleinerung der Arbeitsbreite der Walze durch Beaufschlagung nur eines Teiles benachbarter Stützelemente die Linienkraft auf die Bahnbreite begrenzt ist und gleichzeitig eine überhöhte Kantenpressung der behandelten Warenbahn unabhängig von der Bahnbreite vermieden wird.

Erfindungsgemäss wird dies dadurch erreicht, dass eine Steuereinrichtung vorgesehen ist, mittels der nur ein Teil benachbarter Stützelemente mit Druckmittel versorgbar ist und die Spreizelemente nur in denjenigen Achsenabschnitten der Walze mit Druckmittel versorgt sind, in denen die entsprechenden Stützelemente nicht mit Druckmittel beaufschlagt sind, wobei die Steuereinrichtung synchron miteinander in Achsenrichtung der Walze verschiebbare Trennwände aufweist, durch die die Stützelemente und die Spreizelemente an unterschiedliche Druckmittel-Zuführleitungen anschliessbar sind, wobei die Bewegung der Trennwände derart gekoppelt ist, dass die Spreizelemente zwangsläufig dann an eine drucklose Zuleitung angeschlossen sind, wenn das zugehörige Stützelement im selben Achsenabschnitt mit Druckmittel beaufschlagt ist.

Dies bewirkt, dass die Spreizelemente nur in denjenigen Achsenabschnitten Druckmittel erhalten, in denen die eigentlichen Stützelemente nicht mit Druckmittel versorgt sind, d.h. an den Rändern, während umgekehrt die Stützelemente nur dort Druckmittel erhalten, wo die Spreizelemente nicht beaufschlagt sind, d.h. im Mittelbereich der Walze.

Um den vollen Bereich der möglichen Verstellung der Arbeitsbreite bei gleichzeitiger Elimination einer erhöhten Kantenpressung ausnutzen zu können, ist es vorteilhaft, wenn sich die Reihen der Stützelemente und der Spreizelemente zumindest im vorgesehen Breitenverstellbereich überschneiden.

Die Erfindung macht sich dabei die Erkenntnis zunutze, dass ein elastischer Walzenmantel sich bei Ausübung von Kräften auf dessen Innenseite quer zur Pressebene durch sogenannte Spreizelemente infolge der Schalenwirkung elliptisch verformt. Dadurch wird der Walzenmantel im Preßspalt an der entsprechenden Stelle zurückgezogen, so dass die Presskraft an der entsprechenden Stelle vermindert oder in negative Richtung umgekehrt wird, so dass der Walzenmantel ausserhalb der Warenbahn die Gegenwalze nicht mehr berührt, und zwar ohne dass dabei die in der Pressebene wirkende gesamte Presskraft verändert wird, d. h. ohne die Linienkraft zu beeinflussen, und ohne dass dazu besondere zusätzliche Vorrichtungen zur Stabilisierung des Walzenmantelquerschnittes erforderlich sind.

Die Erfindung wird anhand der in den Figuren dargestellten Ausführungsbeispiele näher erläutert. Es zeigen:
- Fig. 1: eine Durchbiegungsausgleichswalze im Axialteilschnitt,
- Fig. 2: einen Querschnitt durch die Walze nach Fig. 1 entlang der Ebene II-II,
- Fig. 3: einen Axialschnitt durch eine Durchbiegungsausgleichswalze mit Verstelleinrichtung,
- Fig. 4: einen Querschnitt durch die Walze nach Fig. 3 entlang der Ebene IV-IV, und
- Fig. 5: einen Axialschnitt durch eine mehrzonige Durchbiegungsausgleichswalze.

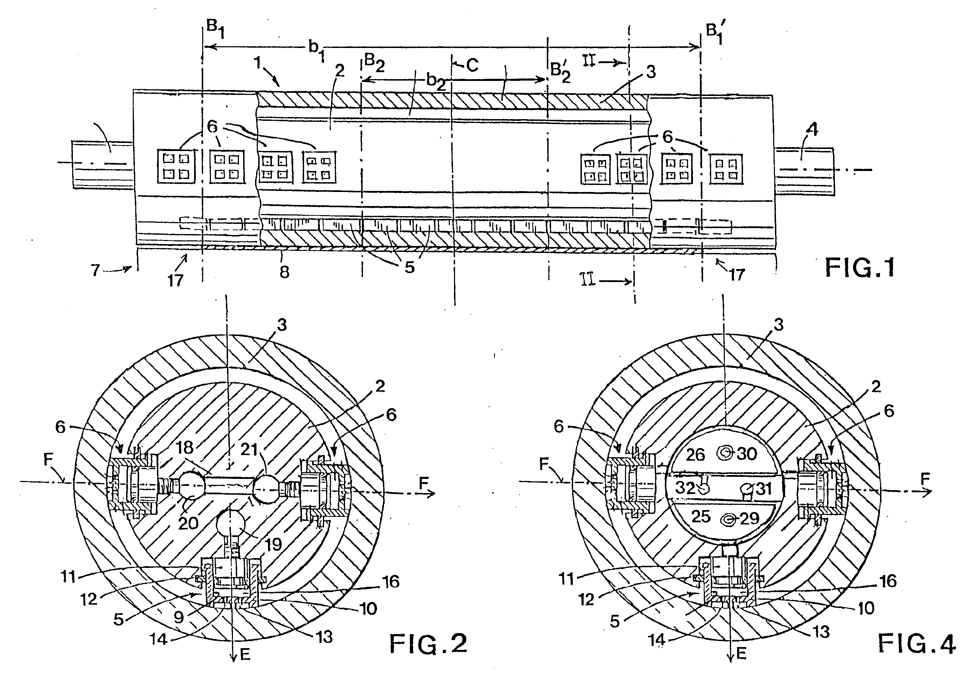

Bei dem in den Figuren 1 und 2 dargestellten Ausführungsbeispiel wirkt eine Durchbiegungseinstellwalze 1 mit einer Gegenwalze 7, die in konventioneller Art als Massiv- oder Hohlwalze ausgebildet sein kann, oder aber ebenfalls als Durchbiegungseinstellwalze, zusammen und übt eine Presskraft auf eine zwischen beiden Walzen durchlaufende Warenbahn 8 aus.

Die Durchbiegungseinstellwalze 1 weist einen drehfesten Träger 2 auf, dessen Zapfen in einer geeigneten Stuhlung gelagert sind, sowie einen um den Träger 2 rotierbaren Walzenmantel 3. Dieser Walzenmantel 3 ist gegen den Träger 2 in einer Pressebene E durch eine Reihe von in Achsenrichtung A dicht nebeneinander angeordneten hydraulischen Stützelementen 5 abgestützt. Mittels dieser Stützelemente 5 ist der Walzenmantel 3 gegenüber dem Träger 2 in der Pressebene E radial beweglich und gleichzeitig auf den Laufflächen der Stützelemente 5 rotierbar gelagert. Die Stützelemente 5 können dabei als hydrostatische Stützelemente gemäss dem U.S. Patent No. 3 802 044 oder in geeigneter anderer Weise ausgebildet sein. Das in Fig. 2 als Beispiel wiedergegebene Stützelement 5 weist einen Stempel 10 auf, dessen zylindrische Innenfläche 9 einen Kolben 11 dichtend umschliesst, so dass sich der Stempel 10 in Wirkrichtung des Stützelementes 5, d.h. in Radialrichtung in der Pressebene E, bewegen kann. Dabei ist dessen Bewegung durch Anschlagringe 12 begrenzt. Auf seiner Lauffläche weist der Stempel 10 hydrostatische Lagertaschen 13 auf, welche durch Bohrungen 14 im Inneren des Stempels 10 mit dem Zylinderraum 16 verbunden sind. Ueber eine Leitung 19 werden der Zylinderraum 16 und die Lagertaschen 13 mit einem hydraulischen Druckmittel einstellbaren oder regelbaren Druckes versorgt, wodurch die vom Stützelement 5 in Richtung zur Gegenwalze 7 ausgeübte Presskraft eingestellt oder geregelt werden kann.

Die den hydraulischen Stützelementen 5 in der Pressebene E gegenüberliegende Seite 15 des Walzenmantels 3 ist dagegen frei von irgendwelchen in Gegenrichtung wirkenden Stützelementen. Stattdessen sind in einer Wirkebene F wenigstens angenähert senkrecht oder quer zur Pressebene E zusätzliche hydraulische Spreizelemente 6 vorgesehen, welche analog aufgebaut sind wie die in der Pressebene E wirkenden Stützelemente 5. Dabei ist es vorteilhaft, diese zusätzlichen Spreizelemente 6 so zu dimensionieren, dass in der Querebene F eine Druckkraft auf den Walzenmantel 3 durch die zusätzlichen Spreizelemente 6 ausgeübt werden kann, die entsprechend der Steifigkeit des Walzenmantels eine wirksame und genügend grosse Deformation bewirkt.

Die beschriebene Durchbiegungseinstellwalze ist derart ausgebildet, dass ihre Arbeitsbreite, d.h. diejenige axiale Erstreckung, in der eine Presskraft ausgeübt wird, auf die Breite der zu behandelnden Warenbahn 8 eingestellt werden kann, d.h. zwischen den Extremwerten zwischen den Ebenen B₁ und B₁′, entsprechend einer Arbeitsbreite b₁, auf die Distanz B₂ - B₂′, entsprechend einer Arbeitsbreite b₂. Die Stützelemente 5 sind in diesem Beispiel mindestens im Mittelteil der Walze zwischen den Ebenen B₁ und B₁′ vorgesehen, während sie in den Randbereichen 17 ausserhalb B₁ und B₁′ fehlen können. Umgekehrt sind Spreizelemente 6 zumindest von den Walzenmantelenden bis zu den Ebenen B₂ auf der einen und B₂′ auf der anderen Seite vorgesehen, während die Mitte der Walze zwischen den Ebenen B₂ und B₂′ frei von Spreizelementen sein kann.

Wie aus Fig. 2 ersichtlich, sind die Spreizelemente 6 ebenfalls an Zuleitungen 20 und 21 für hydraulisches Druckmittel im Träger 2 angeschlossen. Dabei können die Zuleitungen jeweils zweier entgegengesetzter Spreizelemente 16 mit einer Verbindungsleitung 18 verbunden sein, so dass sie den gleichen Druckmitteldruck erhalten.

Zum Betrieb der beschriebenen Walze ist die Steuereinrichtung zur Versorgung der Stützelemente 5 und der Spreizelemente 6 so ausgebildet, dass bei einer in einem vorgegebenen Bereich wählbaren Arbeitsbreite entsprechend der Breite der zu behandelnden Warenbahn nur die innerhalb der Arbeitsbreite liegenden Stützelemente 5 mit Druckmittel beaufschlagt sind, während die Stützelemente 5 ausserhalb der Arbeitsbreite drucklos gehalten sind, und dass umgekehrt nur die ausserhalb der Arbeitsbreite liegenden Spreizelemente 6 Druckmittel erhalten, während die innerhalb der gewählten Arbeitsbreite liegenden Spreizelemente 6 drucklos sind. Somit ist sichergestellt, dass nur innerhalb der Arbeitsbreite eine Presskraft auf die Warenbahn ausgeübt wird, während ausserhalb der Arbeitsbreite nur Spreizkräfte wirksam sind, durch welche zufolge der elliptischen Verformung des Walzenmantels in diesen Aussenbereichen 17 die Presskraft des Walzenmantels reduziert oder gar umgekehrt wird, so dass der Walzenmantel 3 bei entsprechender Spreizkraft entlastet wird oder sogar die Gegenwalze 7 im Aussenbereich 17 nicht mehr berührt. Auf diese Weise wird eine Ueberpressung der Ränder oder Kanten der Warenbahn mit grosser Sicherheit vermieden, und zwar unabhängig von der eingestellten Arbeitsbreite. Von besonderem Vorteil ist es dabei, dass die Spreizelemente nur quer zur Pressebene, d.h. ohne Kraftkomponente in der Pressebene, wirken, d.h. dass die gesamte Presskraft durch die Druckkraft der Spreizelemente nicht beeinflusst oder verändert wird.

Die Steuerung der Druckmittelbeaufschlagung der Stützelemente 5 und der Spreizelemente 6 kann sowohl auf mechanische Weise, als auch durch elektrische Steuerung von in den einzelnen Zuleitungen vorgesehenen Ventilen erfolgen.

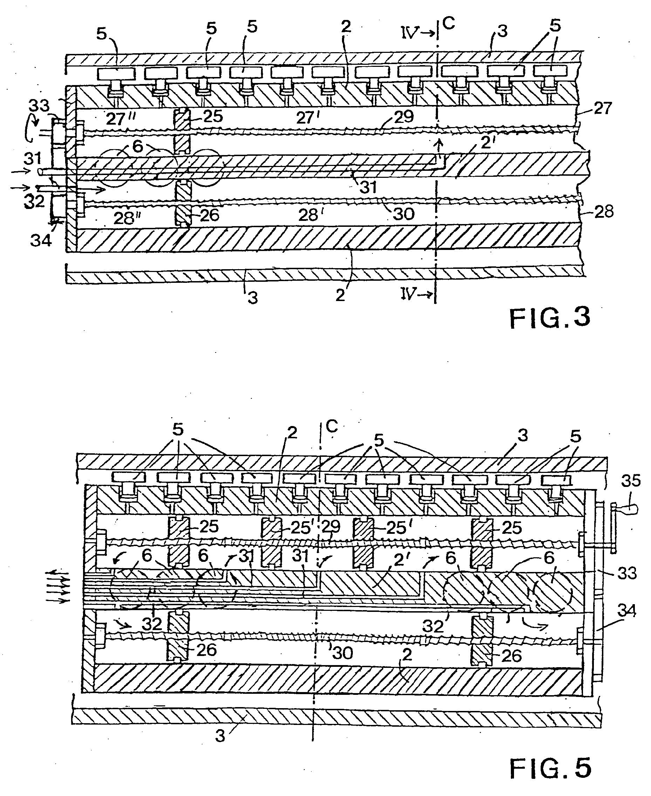

Fig. 3 und 4 zeigen eine Steuereinrichtung für die Beaufschlagung der Stützquellen 5 und der Spreizquellen 6 mit Druckmittel mit Hilfe von verstellbaren Trennwänden 25 bzw. 26, die in Bohrungen 27 und 28 des Trägers 2 mittels Spindeln 29, 30 in Achsenrichtung der Walze verschiebbar sind. Die Spindeln 29 und 30 weisen auf beiden Seiten der Mittenebene C ein gegenläufiges Gewinde auf, so dass sich die beiden Trennwände 25 beidseits der Mittenebene C stets entgegengesetzt zueinander bewegen. Das gleiche gilt für die Spindel 30 und die Trennwände 26. Hierdurch werden die Druckräume 27 und 28 jeweils in mittige Druckräume 27' bzw. 28' und äussere Druckräume 27" bzw. 28" unterteilt. Weiterhin sind im mittleren Teil des Trägers 2′ Zuleitungen 31 und 32 für hydraulisches Druckmittel vorgesehen, wobei die eine Zuleitung 31 in der Mitte des mittleren Druckraumes 27' mündet, während die andere Zuleitung 32 in den Endbereichen der beiden Druckräume 28˝ mündet. Die Stützelemente 5 sind nun mit den Druckräumen 27 verbunden, während die Spreizelemente 6 an die Druckräume 28 angeschlossen sind. Zusätzlich sind die beiden Spindeln 29 und 30 an einem Ende der Walze mit Zahnrädern 33 und 34 oder mit einer anderen Kupplungseinrichtung so miteinander gekoppelt, dass sie nur gleichzeitig und zusammen gedreht werden können, beispielsweise mittels einer Kurbel 35. Damit wird erreicht, dass sich die Trennwände 25 und 26 stets synchron, d.h. miteinander und in gleicher Richtung um gleiche Wege verschieben. Damit wird bewirkt, dass die Stützelemente 5 stets nur im Bereich zwischen den beiden Trennwänden 25 beaufschlagt werden, während die Spreizelemente 6 nur ausserhalb dieses Bereiches mit Druckmittel beaufschlagbar sind.

Fig. 5 zeigt eine Durchbiegungseinstellwalze mit mehr als zwei Trennwänden 25, 25', auf der Seite der Stützelemente 5, welche mit einer Spindel mit abschnittweise unterschiedlicher Steigung verstellt werden können. Hierdurch werden im Arbeitsbereich der Walze drei Zonen gebildet, in denen eine unterschiedliche Presskraft ausgeübt werden kann. Durch die Spindelverstellung sind diese Zonen in ihrer Länge proportional zueinander veränderbar. Auf der Seite der Spreizelemente 6 sind wie im vorher beschriebenen Beispiel nur zwei Trennwände 26 zur Begrenzung der beiden Aussenzonen vorgesehen, die sich synchron mit den äusseren Trennwänden 25 verstellen lassen.

## Patentansprüche

1. Durchbiegungseinstellwalze (1) mit einem rotierbaren, gegenüber einem drehfesten Träger (2) mit einer Reihe benachbarter hydraulischer Stützelemente (5) in einer Pressebene (E) abgestützten Walzenmantel (3), wobei die Stützelemente (5) über Zuleitungen (19, 20, 21) vom Träger (2) aus mit hydraulischem, eine Presskraft erzeugenden Druckmittel versorgbar sind, und der Walzenmantel (3) zumindest in dessen Endbereichen (17) gegenüber dem Träger (2) mit zusätzlichen, ebenfalls mit hydraulischem Druckmittel versorgbaren, im wesentlichen in einer Wirkebene (F) senkrecht zur Pressebene (E) wirkenden hydraulischen Spreizelementen (6) abgestützt ist, dadurch gekennzeichnet, dass eine Steuereinrichtung (25, 26, 29, 30) vorgesehen ist, mittels der nur ein Teil benachbarter Stützelemente (5) mit Druckmittel versorgbar ist, und die Spreizelemente (6) nur in denjenigen Achsenabschnitten der Walze mit Druckmittel versorgt sind, in denen die entsprechenden Stützelemente (5) nicht mit Druckmittel versorgt sind, wobei die Steuereinrichtung synchron miteinander axial verschiebbare Trennwände (25, 26) aufweist, durch die die Stützelemente (5) und die Spreizelemente (6) an unterschiedliche Druckmittel-Zuführleitungen (31, 32) anschliessbar sind, wobei die Bewegung der Trennwände (25, 26) derart gekoppelt ist, dass die Spreizelemente (6) zwangsläufig dann an eine drucklose Zuleitung angeschlossen sind, wenn das zugehörige Stützelement (5) im selben Achsenabschnitt mit Druckmittel beaufschlagt ist.

2. Walze nach Anspruch 1, dadurch gekennzeichnet, dass die Trennwände (25, 26) durch gekoppelte Spindeln (29, 30) mit auf beiden Hälften der Mittelebene (C) gegenläufigem Gewinde verstellbar sind.

3. Walze nach Anspruch 1 oder 2, dadurch gekennzeichnet, dass die zusätzlichen Spreizelemente (6) in ihrer Wirkebene (F) radial beweglich ausgebildet sind.

4. Walze nach einem der Ansprüche 1 - 3, dadurch gekennzeichnet, dass die zusätzlichen Spreizelemente (6) nur an den beiden Enden (17) des Walzenmantels (3) vorgesehen sind und die Mitte (C) des Walzenmantels frei von zusätzlichen Spreizelementen (6) ist.

5. Walze nach Anspruch 4, dadurch gekennzeichnet, dass die Stützelemente (5) und die Spreizelemente (6) in sich in Achsenrichtung (A) überschneidenden Reihen angeordnet sind.

6. Walze nach einem der Ansprüche 1 - 5, dadurch gekennzeichnet, dass die zusätzlichen Spreizelemente (6) so dimensioniert sind, dass sie eine Kraft auszuüben vermögen, welche die Presskraft des Walzenmantels (3) in der Pressebene (E) um einen vorgegebenen Betrag reduziert.

7. Walze nach einem der Ansprüche 1 - 6, dadurch gekennzeichnet, dass die Stützelemente (5) und die Spreizelemente (6) als hydrostatische Stützelemente ausgebildet sind, welche in einem Druckraum (16) in ihrer Wirkrichtung (E, F) radial beweglich sind und an ihrer dem Walzenmantel (3) zugekehrten Lagerfläche Lagertaschen (13) aufweisen, welche über Bohrungen (14) mit dem Druckraum (16) in Verbindung stehen.

8. Walzenanordnung nach Anspruch 7, dadurch gekennzeichnet, dass die Druckräume (16) der in der Pressebene (E) wirkenden Stützelemente (5) und die Druckräume der in Querrichtung (F) wirkenden Stützelemente (6) über Druckzuführleitungen (19, 20, 21) mit Druckmittel unterschiedlichen Druckes versorgbar sind.

## Claims

1. Deflection adjustment roll (1) with a rotatable roll shell (3), which is supported with respect to a non-rotatable carrier (2) by a row of adjacent hydraulic support members (5) in a pressing plane (E), which support members (5) can be supplied with hydraulic pressure medium, which produces a pressing force, from the carrier (2) via feed lines (19, 20, 21), and the roll shell (3) is supported with respect to the carrier (2) at least in its end areas (17) by additional hydraulic expanding members (6), which can also be supplied with hydraulic pressure medium and act essentially in a plane of action (F) at a right angle to the pressing plane (E), characterised in that a control device (25, 26, 29, 30) is provided, by means of which only some of the adjacent support members (5) can be supplied with pressure medium, and the expanding members (6) are only supplied with pressure medium in the axial sections of the roll in which the corresponding support members (5) are not supplied with pressure medium, the control device comprising partitions (25, 26) which can be axially displaced in synchronism with one another and via which the support members (5) and the expanding members (6) can be connected to different pressure medium feed lines (31, 32), and the movement of the partitions (25, 26) being coupled such that the expanding members (6) are automatically connected to an unpressurized feed line when the associated support member (5) in the same axial section is acted upon by pressure medium.

2. Roll according to claim 1, characterised in that the partitions (25, 26) can be adjusted by coupled spindles (29, 30) with threads running in opposite directions in the two halves of the central plane (C).

3. Roll according to claim 1 or 2, characterised in that the additional expanding members (6) are formed so as to be radially mobile in their plane of action (F).

4. Roll according to one of claims 1 - 3, characterised in that the additional expanding members (6) are only provided at the two ends (17) of the roll shell (3), the centre (C) of the roll shell being free from additional expanding members (6).

5. Roll according to claim 4, characterised in that the support members (5) and the expanding members (6) are arranged in rows which overlap in the axial direction (A).

6. Roll according to one of claims 1 - 5, characterised in that the additional expanding members (6) are dimensioned such that they can exert a force which reduces the pressing force of the roll shell (3) in the pressing plane (E) by a predetermined magnitude.

7. Roll according to one of claims 1 - 6, characterised in that the support members (5) and the expanding members (6) are formed as hydrostatic support members which are radially mobile in a pressure chamber (16) in their direction of action (E, F) and comprise bearing pockets (13) at their bearing surface which faces the roll shell (3), which pockets are connected via bores (14) to the pressure chamber (16).

8. Roll arrangement according to claim 7, characterised in that the pressure chambers (16) of the support members (5) acting in the pressing plane (E) and the pressure chambers of the support members (6) acting in the transverse direction (F) can be supplied with pressure medium of a differing pressure via pressure feed lines (19, 20, 21).

## Revendications

1. Cylindre (1) à flexion réglable, avec une chemise de cylindre (3) rotative soutenue dans un plan de serrage (E) contre un support (2) non rotatif au moyen d'une rangée d'éléments d'appui hydrauliques (5) voisins, les éléments d'appui (5) étant alimentés à partir du support (2) par des conduites (19, 20, 21) avec un fluide hydraulique sous pression produisant une force de pressage, et la chemise (3) du cylindre étant soutenue au moins dans ses zones d'extrémités (17), par rapport au support (2), par des éléments écarteurs supplémentaires (6) également alimentés en fluide hydraulique sous pression, agissant essentiellement dans un plan de travail (F) perpendiculaire au plan de pressage (E), **caractérisé** en ce qu'il est prévu un dispositif de commande (25, 26, 29, 30) au moyen duquel une partie seulement des éléments d'appui voisins (5) peut être alimentée en fluide sous pression, et les éléments écarteurs (6) sont alimentés en fluide sous pression seulement dans les sections axiales du cylindre dans lesquelles les éléments d'appui (5) correspondants ne sont pas alimentés en fluide sous pression, le dispositif de commande présentant des cloisons (25, 26) pouvant coulisser axialement en synchronisme l'une avec l'autre, au moyen desquelles une partie seulement des éléments d'appui voisins (5) peuvent être alimentés en fluide sous pression, et les éléments écarteurs (6) ne sont alimentés en fluide sous pression que seulement dans les sections axiales du cylindre dans lesquelles les éléments d'appui (5) et les éléments écarteurs (6) peuvent être raccordés à des conduites différentes (31, 32) d'alimentation en fluide sous pression, le mouvement des cloisons (25, 26) étant conjugué de telle manière que les éléments écarteurs (6) sont obligatoirement raccordés à une conduite dépourvue de pression quand l'élément d'appui (5) associé dans le même section axiale est sollicité par du fluide sous pression.

2. Cylindre selon la revendication 1, caractérisé en ce que les cloisons (25, 26) peuvent être déplacées par des vis-mères (29, 30) couplées, avec des filetages de sens contraire sur les deux moitiés de part et d'autre du plan médian (C).

3. Cylindre selon la revendication 1 ou 2, caractérisé en ce que les éléments écarteurs supplémentaires (6) sont réalisés de manière mobile radialement dans leur plan d'action (F).

4. Cylindre selon une des revendications 1 à 3, caractérisé en ce que les éléments écarteurs supplémentaires (6) ne sont prévus qu'aux deux extrémités (17) de la chemise (3) du cylindre et le milieu (C) de la chemise du cylindre est dépourvu d'éléments écarteurs supplémentaires (6).

5. Cylindre selon la revendication 4, caractérisé en ce que les éléments d'appui (5) et les éléments écarteurs (6) sont disposés en rangées qui se croisent dans le sens axial (A).

6. Cylindre selon une des revendications 1 à 5, caractérisé en ce que les éléments écarteurs supplémentaires (6) sont dimensionnés de manière à pouvoir exercer une force qui diminue la force de pressage de la chemise (3) du cylindre dans le plan de pressage (E) dans une mesure prédéterminée.

7. Cylindre selon une des revendications 1 à 6, caractérisé en ce que les éléments d'appui (5) et les éléments écarteurs (6) sont des éléments d'appui hydrostatiques qui sont mobiles radialement dans une chambre à pression (16), dans le sens où ils exercent leur action, et qui présentent sur leur surface d'appui dirigée vers la chemise (3) du cylindre des poches d'appui (13) qui communiquent par des forures (14) avec la chambre à pression (16).

8. Dispositif de cylindre selon la revendication 7, caractérisé en ce que les chambres à pression (16) des éléments d'appui (5) agissant dans le plan de pressage (E) et les chambres à pression des éléments d'appui ( 6) agissant dans le sens transversal (F) peuvent être alimentées par des conduites d'alimentation sous pression (19, 20, 21) avec du fluide sous pression à des pressions différentes.
